# EUROPEAN PATENT APPLICATION

(11) **EP 3 789 144 A1**
(43) Date of publication of application: **10.03.2021**
(21) Application number: 18917062.4
(22) Date of filing: 04.05.2018
(51) Int. Cl.: B23C 5/10, B23C 5/28

(54) **HELICAL MILLING TOOL WITH FORWARD AND BACKWARD FEEDING**

(71) Applicant: Dalian University Of Technology, Dalian, Liaoning 116024 (CN)
(72) Inventor: DONG, Zhigang, Dalian, Liaoning 116024 (CN); KANG, Renke, Dalian, Liaoning 116024 (CN); YANG, Guolin, Dalian, Liaoning 116024 (CN); ZHU, Xianglong, Dalian, Liaoning 116024 (CN); GAO, Shang, Dalian, Liaoning 116024 (CN); ZHOU, Ping, Dalian, Liaoning 116024 (CN); GUO, Dongming, Dalian, Liaoning 116024 (CN)
(74) Representative: Proi World Intellectual Property GmbH
(86) International application number: PCT/CN2018/085575
(87) International publication number: WO 2019/210506

(57) **Abstract**

Disclosed is a helical milling tool with forward-backward feeding, the tool including a cutting portion, a neck portion and a handle portion, which are successively connected to each other; wherein the cutting portion includes a front-end cutting section, a circumferential cutting section and a back-end cutting section, which are connected successively to each other; the front-end cutting section is of an end milling cutter structure or a drill bit structure; the circumferential cutting section is of a cylindrical shape and is of a circumferential milling cutter structure; and the back-end cutting section is of a frustum-shaped. The tool can avoid defects such as layering and tearing, which go beyond processing requirements in a composite material, improve the processing quality, save on costs, simplify the processing process, improve the production efficiency and prolong the service life of the tool.

## Description

### Technical Field

The present disclosure relates to the hole processing field of composite, metal and laminated structure of composite and metal, in particular to a helical milling tool with forward-backward feeding.

### Background

Composites are widely used in aerospace vehicle design, and hole processing problem of laminated structure of composite and metal is often encountered in the assembling process of aircraft. In the process of hole making, there is usually no other support material on the back of the composite, in this case, delamination, tearing, burr and other processing defects often occur when the tool is cut from the back of the composite.

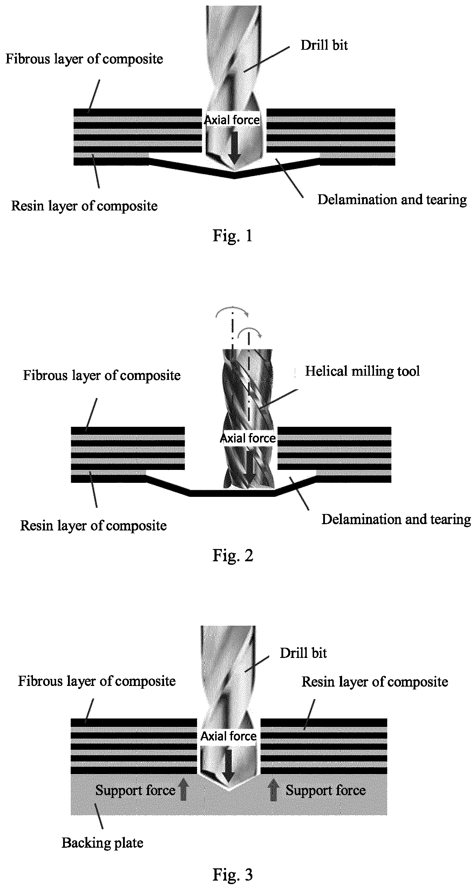

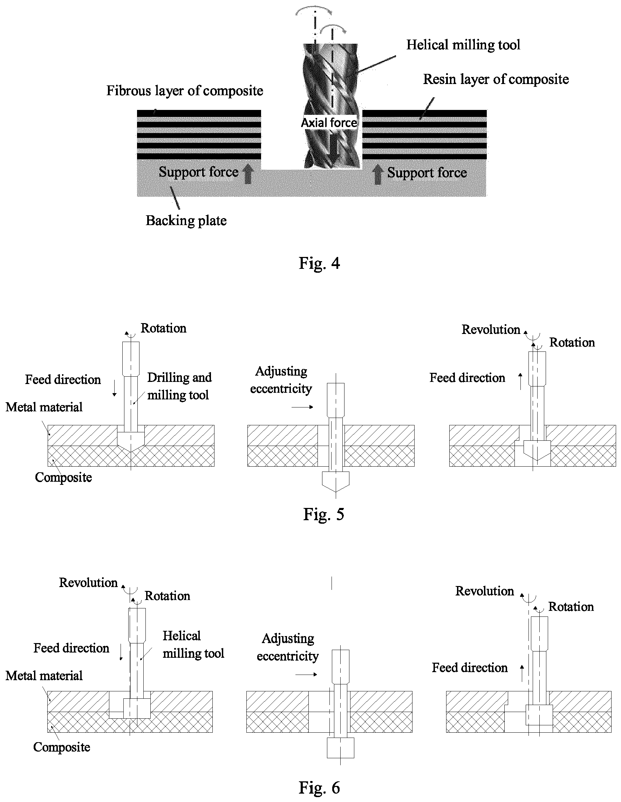

The common method of hole processing is drilling with a drill bit, which will produce a larger axial cutting force. There is a new hole processing method to use a special end milling tool to conduct helical milling, whose axial cutting force is smaller than drilling, but still exists. Composite is usually composed of multi-layer fibers, the resin matrix material with weak strength is usually between different fiber layers, and the axial force in processing is the main cause of the machining damage of composites. When the tool is cut from one side of the composite, the fiber layer close to the outlet side deforms under the action of axial cutting force of the tool, and the resin matrix between different layers is pulled apart, forming delamination, tearing and other processing defects, which affect the hole quality. The processing defects formed at the outlet side of the drill hole are shown in Fig.1, and the processing defects formed at the outlet side of the helical milling hole are shown in Fig.2. If a backing plate is added to the back end of the composite, when the tool cutting close to the outlet side of the composite, the fibrous layer closed to the outlet side will be supported by the backing plate without large deformation, and the resin matrix between the fibrous layers will not be destroyed, avoiding the processing defects such as delamination and tearing. Fig. 3 shows the case of drill hole with backing plate, and Fig. 4 shows the case of helical milling hole with backing plate. However, in actual production, in some cases, the composite cannot be added with backing plate during hole processing; in other cases, although the backing plate can be added when hole processing, but the installation and removal of the backing plate will greatly increase production costs and reduce production efficiency.

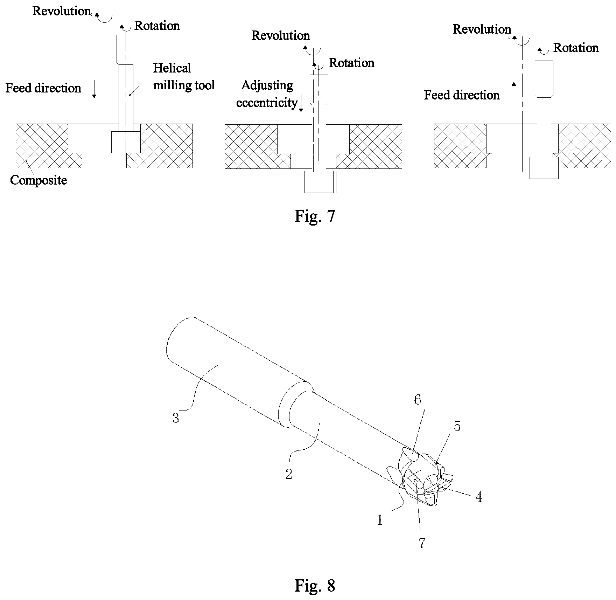

For the hole processing of composite without back support, it is an urgent technical problem to realize defect free and high quality hole processing without backing plate. A feasible method is to use the method of helical milling with forward-backward feeding for laminated structure of composite and metal, processing the outlet end of composite along the opposite direction from the normal feeding direction of helical milling or drilling. Detailed operation is to use a special tool forward feeding to process a pre-processing hole along the direction of cutting in from the metal side and cutting out from the composite, then the cutting portion of the step-shaped tool with large diameter of the front-end cutting portion and small diameter of the back-end neck portion is passed through the pre-processing hole, and make the tool having a certain eccentricity relative to the processing hole, backward feeding is followed from composite layer to metal layer by helical milling, using the cutting edge at the step-shaped surface of the transition section between the back-end of the cutting portion and the neck portion, the pre-processing hole is performed once or more reaming until the final required size is obtained. This processing method can change the direction of axial cutting force during processing, and the metal layer of the laminated structure of composite and metal layer is used as the backing plate to avoid delamination, tearing and other processing defects of the composite. Fig. 5 is a schematic diagram of helical milling method with forward-backward feeding through drilling the pre-processing hole first and then helical milling hole with backward feeding. Fig. 6 is a schematic diagram of helical milling method with forward-backward feeding through helical milling the pre-processing hole first and then helical milling hole with backward feeding. Fig. 7 is a schematic diagram of helical milling method with forward-backward feeding in which front and back ends are respectively processed for monolayer or multilayer composite.

However, the above processing method needs a special processing tool with the diameter of the front end of the cutting portion larger than that of the neck portion, and specially designed cutting edge is needed at the back end of the cutting portion. Currently, there is a lack of such special tools.

### Summary of the Invention

According to the above technical problems, the present disclosure provided a helical milling tool with forward-backward feeding. First, a thru and smaller pre-processing hole is processed by forward feeding from the inlet side, then the final aperture is helically milled from the outlet side by backward feeding, which is used to process hole of laminated structure of composite and metal, so as to solve the problems such as easy lamination and tearing at the outlet of the composite and the disadvantage of time-consuming and laborious installation of backing plate. The present disclosure adopts the following technical solution:
A helical milling tool with forward-backward feeding, includes a cutting portion, a neck portion and a handle portion, which are successively connected.

The cutting portion includes a front-end cutting section, a circumferential cutting section and a back-end cutting section.

The front-end cutting section is a structure of end mill or drill bit; when the front-end cutting section is the end milling tool structure, the front-end cutting section includes four front-end cutting edges symmetrically distributed around the center, which can be fed forward to cut along the axis of the tool; when the front-end cutting section is the drill bit structure, the front-end cutting section is conical, including two front-end cutting edges symmetrically distributed around the center, which can be fed forward to drill along the axis of the tool.

The circumferential cutting section is cylindrical and is a structure of circumferential milling cutter. The cylindrical surface of the circumferential cutting section is provided helical cutting edges extending to the front-end cutting edge, and the helical cutting edges can be fed to cut along the radial direction of the tool.

The back-end cutting section is frustum-shaped, an outer diameter of its large end is matched with a diameter of the circumferential cutting section, and an outer diameter of its small end is matched with a diameter of the neck portion; the side wall of the back-end cutting section is provided an inclined cutting edge extending to the helical cutting edge and can be backward fed to cut along the axis of the tool, the other end of the inclined cutting edge extends to the neck portion.

A length of the neck portion is greater than a hole depth of a through-hole to-be-processed; a diameter of the handle portion is a size convenient for clamping, and a length of which meets the clamping requirements of common processing equipment.

Spiral grooves facilitating chip discharge are respectively arranged between the adjacent front-end cutting edges, between the adjacent helical cutting edges and between the adjacent inclined cutting edges.

The cutting portion is provided a cooling hole realizing cooling and lubrication of the cutting section in processing, and the cooling hole is cut-though the back-end of the handle portion.

Without affecting the overall rigidity of the tool, a difference value between the diameter of the cutting portion and the diameter of the neck portion is as large as possible to realize fast material removal in backward helical milling.

A helical angle of the helical cutting edge is less than 30° to ensure that the chip can be discharged smoothly in backward helical milling.

An axial length of the circumferential section is as small as possible and is greater than a lead of the feed path in backward helical milling.

The front-end cutting section, the circumferential cutting section, the back-end cutting section and the neck portion are provided round corner transitions between each other, and a radius of curvature of the round corner is 0.2mm∼1mm, so as to improve the abrasion resistance of the tool.

When the front-end cutting section is the end milling tool structure, among the four front-end cutting edges, two relatively arranged front-end cutting edges extend to intersect at the axis of the tool, and the other two relatively arranged are terminated without extending to the axis of the tool, so as to facilitate processing and manufacturing.

In order to facilitate chip discharge in backward helical milling, the circumferential cutting section includes a front segment of cutting section and a back segment of cutting section, the front segment of cutting section is provided a front helical cutting edge that can be fed to cut along the radial direction of the tool, the back segment of cutting section is provided a back helical cutting edge that can be fed to cut along the radial direction of the tool; the front helical cutting edge and the back helical cutting edge have opposite and symmetric rotation directions and equal helical angles, the front helical cutting edge extends to the front-end cutting edge, and the back helical cutting edge extends to the inclined cutting edge; the opposite rotation direction adopted by the back segment of the cutting section can make the chip being discharged along the cutting portion direction during the tool helical milling in backward feeding, which makes chip discharge easier and improve the processing quality of the hole wall;

In addition to being used for processing hole of laminated material of composite and metal, the present disclosure can also be used for processing hole of monolayer or multilayer composite, and monolayer metal and laminated metal.

Compared with the prior art, the present disclosure has the following beneficial effects:
1. The present disclosure can avoid delamination, tearing and other defects of the composite beyond the processing requirements, and improve the processing quality. In the first forward feeding machining process, there is no backing plate on the back of the composite, which may produce larger processing defects, but the defective material can be cut off in the process of subsequent helical milling with backward feeding, and no new processing defects will be produced in the process of helical milling with backward feeding. This is due to the change of the direction of axial force on the composite during the process of helical milling in backward feeding, the fibrous layer on the outlet side will not produce deformation that may lead to delamination and tearing. When the tool nears to the interface between the composite layer and the metal layer in backward feeding of helical milling, the mental layer can act as a backing plate, so that the fibrous layer of the composite here does not appear delimination, tearing and other defects.
2. The outlet side of the composite does not need extra backing plates, which saves on costs, simplifies the machining process and improves production efficiency.
3. The present disclosure can improve the life of the tool. When the front-end cutting section of the tool performs forward processing, processing defects within a certain scale are allowed. Therefore, when the front-end cutting edge of the tool's front-end cutting section has a certain wear, the tool can continue to be used even if the processing quality decreases, until the resulting processing defects exceed the allowable value. When the back-end cutting section is used for helical milling in backward feeding, the metal layer can act as the backing plate, therefore, even if some wear is produced, there will be no processing defects near the metal side of the composite.

Based on the above effects, the present disclosure can be widely used in the field of hole processing.

### Brief Description of the Drawings

In order to more clearly illustrate the embodiments of the present disclosure or the technical solutions in the prior art, the drawings required in the description of the embodiments or the prior art will be briefly introduced below. Obviously, the drawings in the following descriptions are some embodiments of the present disclosure. For those of ordinary skilled in the art, other drawings can be obtained based on these drawings without inventive effort.
Fig. 1 is a schematic diagram of the formation of machining damage at the outlet side of composite under the existing drilling processing method in the background art of the present disclosure.
Fig. 2 is a schematic diagram of the formation of machining damage at the outlet side of composite under the existing helical milling processing method in the background art of the present disclosure.
Fig. 3 is a schematic diagram of the inhibition of machining damage when there is a backing plate on the outlet side of composite under the existing drilling processing method in the background art of the present disclosure.
Fig. 4 is a schematic diagram of the inhibition of machining damage when there is a backing plate on the outlet side of composite under the existing helical milling processing method in the background art of the present disclosure.
Fig. 5 is a schematic diagram of helical milling method with forward-backward feeding in the form of drilling the pre-processing hole first and then helical milling hole with backward feeding in the background technology of the present disclosure.
Fig. 6 is a schematic diagram of helical milling method with forward-backward feeding in the form of helical milling the pre-processing hole firstly and then helical milling in backward feeding in the background art of the present disclosure.
Fig. 7 is a schematic diagram of helical milling method with forward-backward feeding in which front and back ends are respectively processed for monolayer or multilayer composite in the background art of the present disclosure.
Fig. 8 is an axonometric drawing of the helical milling tool with forward-backward feeding in embodiment 1 of the present disclosure.
Fig. 9 is a front view of the helical milling tool with forward-backward feeding in embodiment 1 of the present disclosure.
Fig. 10 is a schematic diagram of the front cutting section of the helical milling tool with forward-backward feeding in embodiment 1 of the present disclosure.
Fig. 11 is a physical object picture of the helical milling tool with forward-backward feeding in embodiment 1 of the present disclosure.
Fig. 12 is an enlargement view of physical object of the cutting portion of the helical milling tool with forward-backward feeding in embodiment 1 of the present disclosure.
Fig. 13 is an enlargement view of physical object of the cutting section at the back end of the cutting portion of the helical milling tool with forward-backward feeding in embodiment 1 of the present disclosure.
Fig. 14 is a comparison diagram of the processing effects between the final hole and the pre-processing hole of the laminated structure of composite and metal by using the helical milling tool with forward-backward feeding disclosed in embodiment 1 of the present disclosure, the final hole was obtained by helical milling with forward-backward feeding, and the pre-processing hole was obtained by once helical milling with forward feeding from the inlet side.
Fig. 15 is an axonometric drawing of the helical milling tool with forward-backward feeding in embodiment 2 of the present disclosure.
Fig. 16 is a front view of the helical milling tool with forward-backward feeding in embodiment 2 of the present disclosure.
Fig. 17 is a schematic diagram of the front cutting section of the helical milling tool with forward-backward feeding in embodiment 2 of the present disclosure.
Fig. 18 is an axonometric drawing of the helical milling tool with forward-backward feeding in embodiment 3 of the present disclosure.
Fig. 19 is a front view of the helical milling tool with forward-backward feeding in embodiment 3 of the present disclosure.
Fig. 20 is a physical object picture of the helical milling tool with forward-backward feeding in embodiment 3 of the present disclosure.
Fig. 21 is an enlargement view of physical object of the cutting section of the helical milling tool with forward-backward feeding in embodiment 3 of the present disclosure.
Fig. 22 is an enlargement view of physical object of the back cutting section of the cutting portion of the helical milling tool with forward-backward feeding in embodiment 3 of the present disclosure.
Fig. 23 is a comparison diagram of the processing effects between the final hole and the pre-processing hole by using the helical milling tool with forward-backward feeding disclosed in embodiment 3 of the present disclosure, the final hole was obtained by a combination method of drilling and helical milling, and the pre-processing hole was obtained by once forward drilling from the inlet side.

### Detailed Description of the Preferred Embodiments

To make the objectives, technical solutions and advantages of the present disclosure clearer, a clear and complete description in the embodiments of the present disclosure may be givenherein after in combination with the accompany drawings in the embodiment of the present disclosure. Obviously, the described embodiments are parts of the embodiments of the present disclosure, but not all of them. Based on the embodiments in the present disclosure, all other embodiments obtained by those of ordinary skilled in the art without inventive effort are within the scope of the present disclosure.

A helical milling tool with forward-backward feeding, when used for hole processing of lamination of composite and metal, firstly, a though and smaller pre-processing hole is processed by forward feeding from the inlet side, and then the final aperture is processed by helical milling in backward feeding from the outlet side. As shown in Figs.6 and 7, a schematic diagram of forward feeding to process the pre-processing hole and helical milling with backward feeding to process the final aperture, which is used to hole processing of laminated structure of composite and metal, so as to solve the defects such as easy lamination, tearing at the outlet of the composite and the disadvantage of time-consuming and laborious installation of backing plate.

### Embodiment 1

As shown in Figs. 8 to 10, a helical milling tool with forward-backward feeding, includes a cutting portion 1, a neck portion 2 and a handle portion 3, which are successively connected.

The cutting portion includes a front-end cutting section 4, a circumferential cutting section 5 and a back-end cutting section 6.

The front-end cutting section 4 is an end mill structure, including four front-end cutting edges symmetrically distributed around the center, which can be fed forward to cut along the axis of the tool; the front-end cutting edges are perpendicular to the axis of the tool.

The circumferential cutting section 5 is cylindrical with a structure of circumferential milling cutter, whose cylindrical surface is provided helical cutting edges extending to the front-end cutting edges, which can be fed to cut along the radial direction of the tool.

The back-end cutting section 6 is frustum-shaped, the outer diameter of its large end is matched with the diameter of the circumferential cutting section 5, and the outer diameter of its small end is matched with the diameter of the neck portion 2; the side wall of the back-end cutting section 6 is provided inclined cutting edges extending to the helical cutting edges and can be backward fed to cut along the axis of the tool, the other end of the inclined cutting edges extend to the neck portion 2.

A length of the neck portion 2 is greater than the hole depth of a through-hole to-be-processed; the diameter of the handle portion 3 is a size convenient for clamping with the length meeting the clamping requirements of common processing equipment.

Spiral grooves facilitating chip discharge are respectively arranged between the adjacent front-end cutting edges, between the adjacent helical cutting edges and between the adjacent inclined cutting edges.

The cutting portion 1 is provided a cooling hole 7 to realize cooling and lubrication of the cutting section in processing, and the cooling hole 7 is cut-though with the back-end of the handle portion 3, and the cooling hole 7 is located in the circumferential cutting section 5.

Without affecting the overall rigidity of the tool, a difference value between the diameter of the cutting portion 1 and the diameter of the neck portion 2 is as large as possible to realize fast material removal in backward helical milling.

The helical angle of the helical cutting edge is less than 30°.

The axial length of the circumferential cutting section 5 is as small as possible and is greater than the lead of the feed path in backward helical milling.

The front-end cutting section 4, the circumferential cutting section 5, the back-end cutting section 6 and the neck portion 2 are provided round corner transitions between each other, and a radius of curvature of the round corner is 0.2mm∼1mm.

Among the four front-end cutting edges, two relatively arranged front-end cutting edges 8 extend to intersect at the axis of the tool, and the other two relatively arranged front-end cutting edges 9 terminate without extending to the axis of the tool.

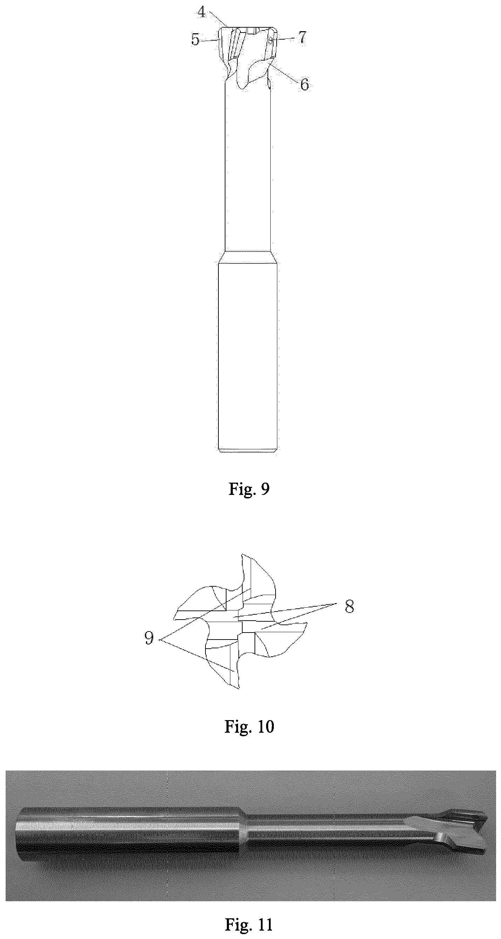

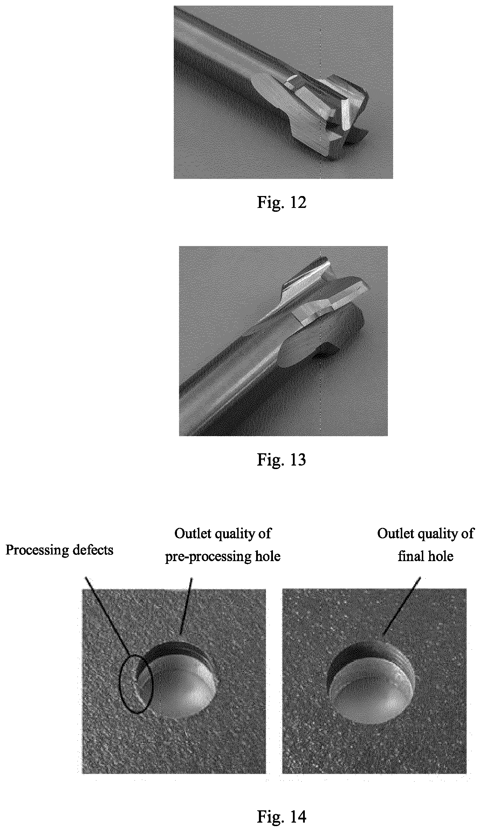

Figs. 11 to 14 are the physical object pictures of the tool, and are the comparison diagram of the processing effect between the final hole and the pre-processing hole of the laminated structure of composite and metal by using the helical milling tool with forward-backward feeding disclosed in this embodiment, the final hole was obtained by helical milling with forward-backward feeding, and the pre-processing hole was obtained by once helical milling with forward feeding from the inlet side.

### Embodiment 2

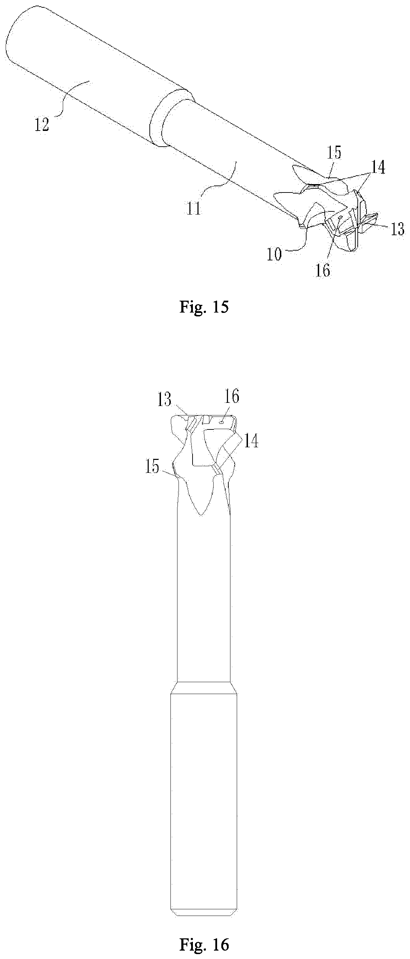

As shown in Figs. 15 to 17, a helical milling tool with forward-backward feeding, includes a cutting portion 10, a neck portion 11 and a handle portion 12, which are successively connected.

The cutting portion 10 includes a front-end cutting section 13, a circumferential cutting section 14 and a back-end cutting section 15.

The front-end cutting section 13 is an end mill structure, including four front-end cutting edges symmetrically distributed around the center, which can be forward fed to cut along the axis of the tool, the front-end cutting edges are perpendicular to the axis of the tool.

The circumferential cutting section 14 is cylindrical with a structure of circumferential milling tool, including a front segment of the cutting section and a back segment of the cutting section; the front segment of the cutting section has a front helical cutting edge that can be fed to cut along the radical direction of the tool, and the back segment of the cutting section has a back helical cutting edge that can be fed to cut along the radical direction of the tool; the front helical cutting edge and the back helical cutting edge have opposite and symmetric rotation directions and equal helical angles; the front helical cutting edge extends to the front-end cutting edge; the opposite rotation direction adopted by the back segment of the cutting section can make the chip being discharged towards the cutting portion during helical milling in backward feeding, which makes chip discharge easier and improve the quality of processing hole wall;
the back-end cutting section 15 is frustum-shaped, the outer diameter of its large end is matched with the diameter of the circumferential cutting section 14, and the outer diameter of its small end is matched with the diameter of the neck portion 11; the side wall of the back-end cutting section 15 is provided inclined cutting edges extending to the helical cutting edges and can be backward fed to cut along the axis of the tool, the other end of the inclined cutting edges extend to the neck portion 11;
a length of the neck portion 11 is greater than the hole depth of a through-hole to-be-processed; the diameter of the handle portion 12 is a size convenient for clamping with the length meeting the clamping requirements of common processing equipment.

Spiral grooves are respectively arranged between the adjacent front-end cutting edges, between the adjacent helical cutting edges and between the adjacent inclined cutting edges to facilitate chip discharge.

The cutting portion 13 is provided a cooling hole 16 to realize cooling and lubrication of the cutting section in processing, and the cooling hole 16 is cut-though with the back-end of the handle portion 12, and the cooling hole 16 is located in the circumferential cutting section 14.

Without affecting the overall rigidity of the tool, a difference value between the diameter of the cutting portion 10 and the diameter of the neck portion 11 is as large as possible to realize fast material removal in backward helical milling.

The helical angle of the helical cutting edge is less than 30°.

The axial length of the circumferential cutting section 14 is as small as possible and is greater than a lead of the feed path in backward helical milling.

The front-end cutting section 13, the circumferential cutting section 14, the back-end cutting section 15 and the neck portion 11 are provided round corner transitions between each other, and a radius of curvature of the round corner is 0.2mm∼1mm.

Among the four front-end cutting edges, two relatively arranged front-end cutting edges 17 extend to intersect at the axis of the tool, the other two relatively arranged terminate without extending to the axis of the tool, so as to facilitate processing and manufacturing.

The tool in Embodiment 1 and 2 can be used in hole processing of lamination of composite and metal, it can also be used in hole processing of monolayer or multilayer composites, metal and laminated metal. Firstly, a though and small pre-processing hole is processed on the composite by helical milling, then a first half of the processing hole is processed by helically milling from the inlet side, and the first half of the processing hole reaching the final diameter with a depth less than that of the hole to-be-processed, and then a second half of the processing hole is processed by backward helical milling out from the outlet side, to obtained the hole to-be-processed. The present disclosure can also be used in hole processing of metal materials, and eliminate flash and burrs on the outlet side of metal materials by backward helical milling.

### Embodiment 3

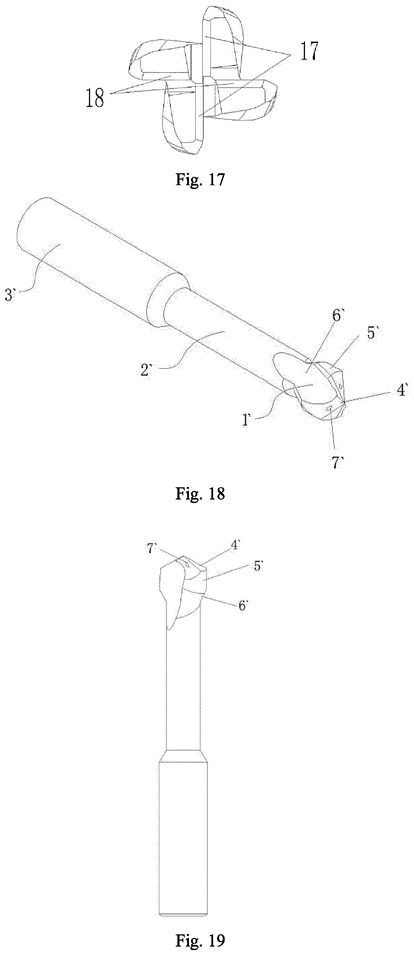

As shown in Figs. 18 and 19, a helical milling tool with forward-backward feeding, includes a cutting portion 1', a neck portion 2' and a handle portion 3', which are successively connected.

The cutting portion 1' includes a front-end cutting section 4', a circumferential cutting section 5' and a back-end cutting section 6'.

The front-end cutting section 4' is conical with drill bit structure, including two front cutting edges symmetrically distributed around a center, which can be fed forward to dril along the axis of the tool.

The circumferential cutting section 5' is cylindrical with a structure of circumferential milling cutter, whose cylindrical surface is provided a helical cutting edges extending to the front-end cutting edges, and the helical cutting edges can be fed to cut along the radial direction of the tool.

The back-end cutting section 6' is frustum-shaped, the outer diameter of its large end is matched with the diameter of the circumferential cutting section 5', and the outer diameter of the small end is matched with the diameter of the neck portion 2'; the side wall of the back-end cutting section 6' is provided inclined cutting edges extending to the helical cutting edges and can be backward fed to cut along the axis of the tool, the other end of the inclined cutting edges extend to the neck portion 2'.

A length of the neck portion 2' is greater than the hole depth of a through-hole to-be-processed; the diameter of the handle portion 3' is a size convenient for clamping with the length meeting the clamping requirements of common processing equipment.

Spiral grooves are respectively arranged between the adjacent front-end cutting edges, between the adjacent helical cutting edges and between the adjacent inclined cutting edges to facilitate chip discharge.

The cutting portion 1' is provided a cooling hole 7' to realize cooling and lubrication of the cutting section in processing, and the cooling hole 7' is cut-though with the back-end of the handle portion 3', the cooling hole 7' is located in the front-end cutting section 4'.

Without affecting the overall rigidity of the tool, a difference value between the diameter of the cutting portion 1' and the diameter of the neck portion 2' is as large as possible to realize fast material removal when backward helical milling hole.

A helical angle of the helical cutting edge is less than 30°.

An axial length of the circumferential cutting section 5' is as small as possible and is greater than a lead of the feed path in backward helical milling hole.

The front-end cutting section 4', the circumferential cutting section 5', the back-end cutting section 6' and the neck portion 2' are provided round corner transitions between each other, and a radius of curvature of the round corner is 0.2mm∼1mm.

Fig. 5 is a schematic diagram of the process of drilling the pre-processing hole with forward feeding and helical milling the final aperture with backward feeding in the embodiment. A tool combined with drilling and helical milling, when used for hole processing of lamination of composite and metal, firstly, a thru and smaller pre-processing hole is processed by forward drilling from the inlet side by the front-end cutting 4', and then the final aperture is processed by backward helical milling from the outlet side, which is used in hole processing of laminated structure of composite and metal, solving the defects such as easy delamination and tearing at the outlet of composite and the disadvantages of time consuming and laborious installation of backing plate.

The embodiment can also be used in hole processing of composite, metal and laminated structure, and flash and burr on material outlet side can be eliminated by backward helical milling hole.

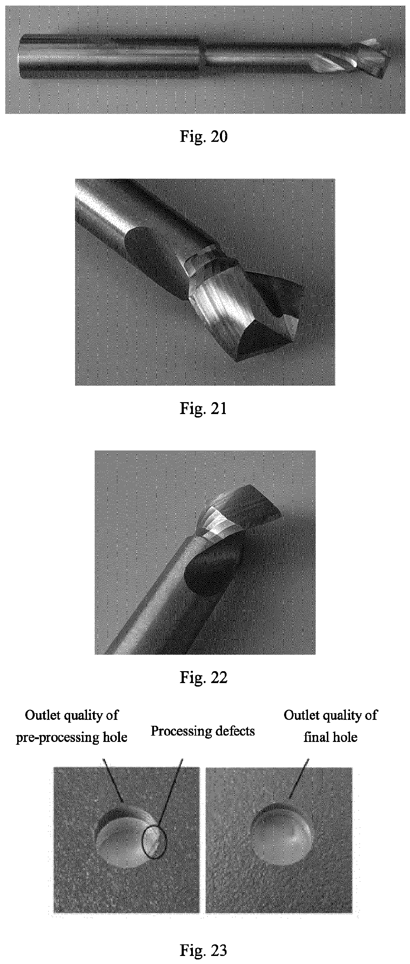

Figs. 20 to 23 are the physical object picture of the tool, and the comparison diagram of the processing effects between the final hole and the pre-processing hole by using the helical milling toll with forward-backward feeding provided in the embodiment, the final hole was obtained by a combination method of drilling and helical milling, and the pre-processing hole was obtained by once drilling with forward feeding from the inlet side of the present disclosure.

Finally, it should be stated that the above embodiments are only used to illustrate the technical solutions of the present disclosure without limitation; and despite reference to the aforementioned embodiments to make a detailed description of the present disclosure, those of ordinary skilled in the art should understand: the described technical solutions in above various embodiments may be modified or the part of or all technical features may be equivalently substituted; while these modifications or substitutions do not make the essence of their corresponding technical solutions deviate from the scope of the technical solutions of the embodiments of the present disclosure.

The present disclosure is applicable to the hole processing of composite and metal laminated structure, and is also applicable to the hole processing of composite monolayer, composite lamination, metal monolayer and metal lamination, avoiding the machining defects such as burr and flash on the outlet side by helical milling with backward feeding.

## Claims

1. A helical milling tool with forward-backward feeding, comprising a cutting portion, a neck portion and a handle portion, which are successively connected; wherein,
the cutting portion comprises a front-end cutting section, a circumferential cutting section and a back-end cutting section;
the front-end cutting section is an structure of end mill or drill bit; when the front-end cutting section is the end mill structure, the front-end cutting section comprises four front-end cutting edges symmetrically distributed around a center, which can be fed forward to cut along the axis of the tool; when the front-end cutting section is the drill bit structure, the front-end cutting section is conical, comprising two front-end cutting edges symmetrically distributed around a center, which can be fed forward to drill along the axis of the tool;
the circumferential cutting section is of a cylindrical shape and is of a structure of circumferential milling cutter, whose cylindrical surface is provided with helical cutting edges extending to the front-end cutting edges, and the helical cutting edges can be fed to cut along the radial direction of the tool; and
the back-end cutting section is of a frustum shape, an outer diameter of its large end is matched with a diameter of the circumferential cutting section, and an outer diameter of its smaller end is matched with a diameter of the neck portion; the side wall of the back-end cutting section is provided inclined cutting edges extending to the helical cutting edges and can be backward fed to cut along the axis of the tool, the other end of the inclined cutting edges extend to the neck portion.

2. The tool according to claim 1, wherein a length of the neck portion is greater than a hole depth of a through-hole to-be-processed; a diameter of the handle portion is a size convenient for clamping, and a length of which meets the clamping requirements of common processing equipment.

3. The tool according to claim 1, wherein spiral grooves facilitating chip discharge are respectively arranged between the adjacent front-end cutting edges, between the adjacent helical cutting edges and between the adjacent inclined cutting edges.

4. The tool according to claim 1, wherein the cutting portion is provided a cooling hole realizing cooling and lubrication of the cutting sections in processing, and the cooling hole is cut-though with the back-end of the handle portion.

5. The tool according to claim 1, wherein without affecting the overall rigidity of the tool, a difference between the diameter of the cutting portion and the diameter of the neck portion is as large as possible to realize the material removal in backward helical milling.

6. The tool according to claim 1, wherein a helical angle of the helical cutting edge is less than 30°.

7. The tool according to claim 1, wherein an axial length of the circumferential cutting section is as small as possible, and is greater than a lead of the feed path in backward helical milling.

8. The tool according to claim 1, wherein the front-end cutting section, the circumferential cutting section, the back-end cutting section and the neck portion are provided round corner transitions between each other, and a radius of curvature of the round corner is 0.2mm∼1mm.

9. The tool according to claim 1, wherein when the front-end cutting section is the end milling tool structure, among the four front-end cutting edges, two relatively arranged front-end cutting edges extend to intersect at the axis of the tool, and the other two relatively arranged terminate without extending to the axis of the tool.

10. The tool according to claim 1, wherein the circumferential cutting section comprises a front segment of cutting section and a back segment of cutting section, the front segment of cutting section is provided a front helical cutting edge that can be fed to cut along the radial direction of the tool, the back segment of cutting section is provided a back helical cutting edge that can be fed to cut along the radial direction of the tool; the front helical cutting edge and the back helical cutting edge have opposite and symmetric rotation directions and equal helical angles; the front helical cutting edge extends to the front-end cutting edge, and the back helical cutting edge extends to the inclined cutting edge.
